# EUROPEAN PATENT APPLICATION

(11) **EP 4 301 022 A1**
(43) Date of publication of application: **03.01.2024**
(21) Application number: 22306298.5
(22) Date of filing: 31.08.2022
(51) Int. Cl.: H04W 12/30, H04W 8/20, H04W 8/18

(54) **A METHOD FOR DOWNLOADING A PROFILE FROM A SM-DP+ TO A A SECURE ELEMENT AND CORRESPONDING SM-DP+**

(30) Priority: 30.06.2022 EP 22305968
(71) Applicant: THALES DIS FRANCE SAS, 92190 Meudon (FR)
(72) Inventor: PERTICARA, Francois, 13720 LA BOUILLADISSE (FR); GARCIN, Florent, 13170 LES PENNES MIRABEAU (FR); PICO, Richard, 13080 LUYNES (FR); VALLES, Gregory, 13011 MARSEILLE (FR)
(74) Representative: Scheer, Luc

(57) **Abstract**

The invention concerns a method for downloading a profile from a SM-DP+ (22) to a secure element cooperating with a device (23), the SM-DP+ (22) storing profiles classified in three categories:
- Preferred profile type, a profile type that has been successfully downloaded in a previous secure element;
- Authorized profile type, a profile type that is authorized to be downloaded to the secure element by the MNO providing the profile type to the SM-DP+ (22);
- Forbidden profile type, a profile type that has been downloaded on a previous device with failure,
the method comprising:
- Retrieving by the SM-DP+ (22) a device type identifier of the device (23) and selecting in the categories a Preferred profile type or an Authorized profile type in function of the device type identifier;
- Downloading from the SM-DP+ (22) to the device (23) a profile selected in the Preferred profile type or Authorized profile type in function of the device type identifier.

## Description

The present invention concerns telecommunications and more precisely the download of a mobile network operator (MNO) profile in a secure element cooperating with a device.

The secure element can be a Sim card, an UICC, an embedded UICC (eUICC) or an integrated UICC (iUICC) for example.

The device can be a mobile phone, a smartphone, a PDA, a M2M or an loT device for example. It is known that profiles (including subscriptions, keys, files, applets, elementary files,...) can be downloaded in secure elements in the field thanks to a SM-DP+, as defined by the GSMA specifications. SM-DP stands for Subscription Manager Data Preparation.

More precisely, in the eUICC domain, a profile is downloaded from a SM-DP+ server (Solution server to manage the eSIM download remotely) to the eUICC through a device in which the eUICC is embedded.

Hereafter we describe the procedure defined by the SGP.22 from the GSMA.

When the user signs a contract or picks up a prepaid subscription, the profile attached to this contract is downloaded from a server on the network. This server is the SM-DP+. The SM-DP+ is contacted by the LPA application (Local Profile Assistant) to start a profile download. Later in the process the SM-DP+ is directly contacted by the eUICC with the help of the LPA (through an encrypted data channel) to download a new profile.

The SM-DP+ also communicates with the provisioning system of the network operator, e.g. in the following scenario: The user buys a prepaid subscription (online or in a store). The network operator then links the contract to a profile that the network operator knows that it already exists on the SM-DP+. The network operator then gives a MachingID to profile and informs the SM-DP+ that a particular MatchingID has been assigned to a particular profile. The MatchingID is then also given to the user as part of the 2D barcode or QR code which is scanned by the LPA application. The MachingID is then sent by the LPA to the SM-DP+ when the user wants to download the profile so the SM-DP+ can find the profile which the network operator's provisioning system has assigned to the user.

As the download of a profile requires user interaction, the LPA is an application on the device that lets the user manage his virtual SIM cards (profiles). Management operations are downloading new profiles, activating and deactivating them and also deleting them from the eUICC. The application that interacts with the user and communicates with the eUICC and the server in the network is this LPA. In theory, the LPA can reside in the eUICC or in the device that interacts with the user.

The profiles are provided by MNOs and comprises profile components. These profile components are:
- A MNO SD (Security Domain);
- Supplementary Security Domains (SSD) and a CASD (Controlling Authority Security Domain);
- Applets ;
- Applications, e.g. NFC applications ;
- a NAAs (Network Attachment Subsystem);
- Other elements of the File System;
- Profile Metadata, including Profile Policy Rule.

The devices are provided by device makers (OEM).

A MNO books a profile for the end user but the MNO does not know the real device used by the end-user.

The MNO must book a profile to the SM-DP+ to deliver a profile behind a subscription plan to the end user.

Today with the specification provided by the GSMA, the MNO prior the download does not know the device and there is a risk that the profile booked to the SM-DP+ is not compliant with the device.

Annex F of the GSMA specification SGP.22 - RSP Technical Specification entitled "Profile Eligibility Check (Informative)" V2.x describes two types of checking:
- Static Eligibilty Check (SEC): If the MNO does not know the device (its IMEI) and eUICC (its EID) and their capabilities, the eligibility is not possible.
- Dynamic Eligibiliy Check (DEC): The check is based on eUICC Info and Device Capabilities signed by the eUICC during "Download & Installation procedure". So the "compatible or not" profile is already booked and used.

In this case, the end user will receive an error message, and the MNO must book an error profile to the SM-DP+, with potentially the same risk.

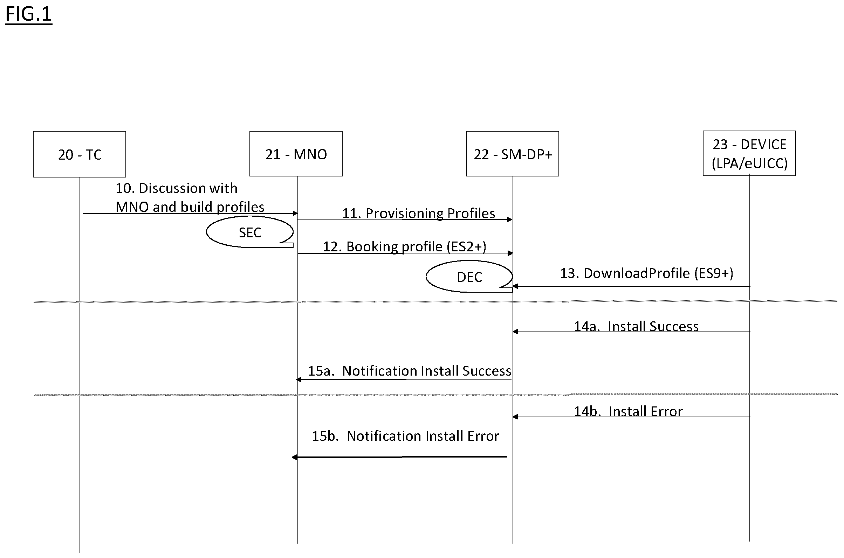

Figure 1 represents exchanges between a MNO server 21, for example an OTA server, a SM-DP+ 22 and a device 23 comprising a LPA and an eUICC.

In this figure, a Technical Consultant (TC 20) is also represented.

The TC 20, at step 10, after having discussed with the MNO 21 about its needs, builds profiles that are prepared by the MNO in his server 21.

At step 11, the MNO 21 server provisions these profiles in the SM-DP+ 22.

In the SEC scenario, at step 12, the MNO server 21 books profiles through an ES2+ interface in the SM-DP+ 22.

The ES2+ interface connects the SM-DP+ 22 with the MNO server 21. Standardization of this interface is necessary because the SM-DP+ server 22 can be operated by different entities. For example, a MNO could buy and operate his own SM-DP+ server, or he could outsource SM-DP+ operation and the creation of profiles to an external entity.

In the DEC scenario, through an ES9+ interface, at step 13, the LPA establishes an encrypted connection to the SM-DP+ 22, e.g. when the user wants to download a new profile (virtual SIM). Two solutions are then possible after installation of the profile in the eUICC:
- If the installation is successful, the device 23 informs the SM-DP+ 22 at step 14a of this success. The SM-DP+ 22 at step 15a notifies the MNO server 21 of the installation success;
- If the installation is not successful, the device 23 informs the SM-DP+ 22 at step 14b of this failure. The SM-DP+ 22 at step 15b notifies the MNO server 21 of the installation failure.

Step 13 consists in fact in four successive requests from the eUICC to the SM-DP+ 22:
The first request is a function called "InitiateAuthentication".

This function requests the SM-DP+ 22 authentication. This is following the "GetEUICCChallenge" between the eUICC and the LPA, where the LPA retrieves material from the eUICC to be provided to the SM-DP+ 22. On reception of this function call, the SM-DP+ 22 shall:
- Verify that it supports the Specification Version Number indicated by the eUICC.
- Check if the received address matches its own SM-DP+ 22 address.
- Check if it can use one of the GSMA CI Public Keys against which eUICC signatures can be verified, and select the CI.
- Verify that it can provide a CERT.DPauth.ECDSA signed by one of the GSMA CI Public Keys supported by the eUICC and select a CERT.DPauth.ECDSA preferably according to the priority provided by the eUICC for the CI Public Keys. If any of these verifications fail, the SM-DP+ 22 shall return a 'Function execution status' indicating 'Failed' with the relevant status code. Otherwise the SM-DP+ 22 will:
   ∘ Generate a TransactionID that is used to uniquely identify the ongoing RSP session.
   ∘ Generate a ServerChallenge for eUICC authentication attached with the ongoing RSP session.
   ∘ Generate a serverSigned1 data object as expected by the eUICC.
   ∘ Generate a signature (serverSignature1).
The second request is a function called "AuthenticateClient".

This function is called by the LPA to request the authentication of the eUICC by the SM-DP+ 22. This function is correlated to a previous normal execution of an "ES9+.InitiateAuthentication" function described above through a TransactionID generated and delivered by the SM-DP+. The TransactionID is an identifier for the current transaction (related to a given device). This TransactionID is incremented at each transaction for avoiding replay attacks. On reception of this function call, the SM-DP+ will:
- Verify the validity of the CERT.EUM.ECDSA, using the related public key PK.CI.ECDSA.
- Verify the validity of the CERT.EUICC.ECDSA, using the public key PK.EUM.ECDSA.
- Verify the eUICC signature (euiccSignature1) using the PK.EUICC.ECDSA.
- Verify that the TransactionID is known and relates to an ongoing RSP session.
- Verify that the ServerChallenge attached to the ongoing RSP session matches the ServerChallenge returned by the eUICC.
The third request is a function called "GetBoundProfilePackage".

This function has to be called to request the delivery and the binding of a Profile Package for the eUICC. This function is correlated to a previous normal execution of an "ES9+.AuthenticateClient" function through the TransactionID. On reception of this function call, the SM-DP+ 22 will:
- Verify that the received TransactionID is known and relates to an ongoing RSP session.
- Verify the eUICC signature (euiccSignature2) using the PK.EUICC.ECDSA attached to the ongoing RSP session.
- Verify if this order requires a Confirmation Code verification; if yes, the SM-DP+ 22 verifies that the received Hashed Confirmation Code matches the value known by the SM-DP+ 22.

The fourth and last function is called "HandleNotification".

This function is called by the LPA to notify the SM-DP+ 22 that a Profile Management Operation has successfully been performed on the eUICC. This corresponds to steps 14a and 14b.

The problem with these known solutions is that, as already said, with the specification provided by the GSMA, the MNO prior the download doesn't know the device and there is a risk that the profile booked to the SM-DP+ 22 is not compliant with the device.

A solution to this problem has already been disclosed in a co-pending patent application referenced EP-22305968.4 entitled "A method for informing a mobile network operator server which profile of a ProfileType should be downloaded from a SM-DP+ to a secure element" and filed on June 30, 2022.

This patent application discloses a method for informing a mobile network operator server which profile should be downloaded from a SM-DP+ to a secure element cooperating with a device, the SM-DP+ storing profiles classified in three categories:
- Preferred profile type, a profile type that has been successfully downloaded in a previous secure element;
- Authorized profile type, a profile type that is authorized to be downloaded to the secure element by the MNO providing the profile type to the SM-DP+;
- Forbidden profile type, a profile type that is forbidden to be downloaded to the secure element by the MNO providing the profile to the SM-DP+,
   this method comprising:
   - generating and sharing between the mobile network operator server and the SM-DP+ an Eligibilityld and transmitting the Eligibilityld from the device to the SM-DP+ along with information on the secure element and the device;
   - transmitting from the SM-DP+ to the mobile network operator server the information on the profile to be downloaded in the secure element, based on the Eligibilityld and the information on the secure element and the device.

This method has the drawback that many exchanges between the mobile network operator (MNO) server and the SM-DP+ are necessary for letting the MNO server to decide which profile has to be downloaded in the secure element.

The present invention proposes a simplified solution to the above-mentioned problem.

The invention concerns the way to download a profile suitable for any eSIM profile. The aim is to reduce the support tasks and the administration interventions to give a device connectivity for any device (5G profile SIMAIIiance 2.3.1 template support, new device...) and to provide a better end user experience.

The present invention proposes a solution to this problem.

More precisely, the invention proposes a method for downloading a profile from a SM-DP+ to a secure element cooperating with a device, the SM-DP+ storing profiles classified in three categories:
- Preferred profile type, a profile type that has been successfully downloaded in a previous secure element;
- Authorized profile type, a profile type that is authorized to be downloaded to the secure element by the MNO providing the profile type to the SM-DP+;
- Forbidden profile type, a profile type that has been downloaded on a previous device with failure,
   this method comprising:
   - Retrieving by the SM-DP+ a device type identifier of the device and selecting in the categories a Preferred profile type or an Authorized profile type in function of the device type identifier;
   - Downloading from the SM-DP+ to the device a profile selected in the Preferred profile type or Authorized profile type in function of the device type identifier.
Preferably, the device type identifier is a TAC or an IMEI.

Advantageously, the secure element is a Sim card, a UICC, an eUICC or an iUICC.

The invention also concerns a SM-DP+ comprising means for selecting a profile for a secure element cooperating with a device, the SM-DP+ storing profiles classified in three categories:
- Preferred profile type, a profile type that has been successfully downloaded in a previous secure element;
- Authorized profile type, a profile type that is authorized to be downloaded to the secure element by the MNO providing the profile type to the SM-DP+;
- Forbidden profile type, a profile type that has been downloaded on a previous device with failure,
   the SM-DP+ also comprising means for selecting, based on a device type identifier received from the device, a Preferred profile type or an Authorized profile type and downloading from the SM-DP+ to the device a profile selected in the Preferred profile type or Authorized profile type in function of the device type identifier.

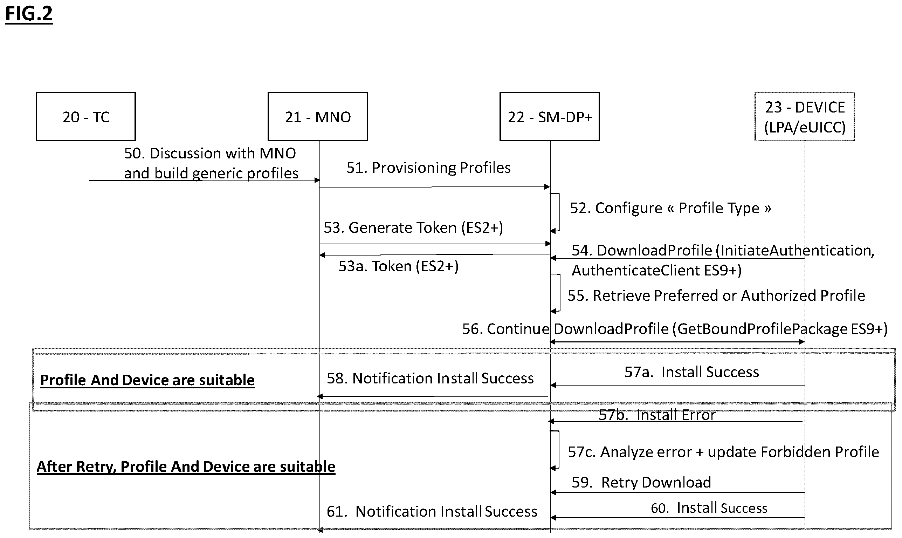

The invention will be better understood by reading the following description of figure 2 that represents a solution for solving the above-mentioned problem.

For this solution, we need three states of profile types to define the available actions of the SM-DP+ 22. These profiles types are the followings:
- Preferred profile type, a profile type that has been successfully downloaded in a previous secure element;
- Authorized profile type, a profile type that is authorized to be downloaded to the secure element by the MNO providing this profile type to the SM-DP+ 22. An Authorized profile type table comprises a plurality of profiles, each profile being identified by an ICCID;
- Forbidden profile type, a profile type that has been downloaded on a previous device with failure.

In the proposed solution, the SM-DP+ server 22 learns and makes decisions using successful or error downloads. In addition, at the end, the operator is notified of the profile downloaded.

In figure 2, the same entities represented in figure 1 are present.

The method according to the invention will now be described:
Steps 50 and 51 are the same as steps 10 and 11 of figure 1: A TC provides profiles to be compliant with the specification of device makers (5G, OS, OS version,...) and several batch profiles (Profile Type) are sent from the MNO server 21 to the SM-DP+ server 22.

At step 52, an administrator of the SM-DP+ 22 configures the Profile Types (Authorized by default). A profile type that is by default Authorized can become Preferred or Forbidden. By default, the profileType is Authorized. The Authorized profileType is the profile that will be used for the first download of a profile on a device/eUICC whatever the required profile.

At step 53, the MNO server 21 asks the SM-DP+ 22 to generate a token. This corresponds to authorize a downloading of a single profile on a device (the MNO decides that a profile has to be downloaded on a device).

If the MNO knows the model of the device (the user just bought the device), it can ask for a specific Token (e.g. a token for a S10 Samsung smartphone or a token for an Apple 11 smartphone).

If the MNO does not know the model of the device (the user didn't purchase a device yet), there is no need to know the device model and no need to select a specific profile. This token request is sent with ES2+ protocol.

At step 53a, the token generated by the SM-DP+ 22 is returned to the MNO 21.

At step 54, the device/LPA 23 performs "download" actions with ES9+ (InitiateAuthentication, AuthenticateClient ES9+). Here the device 23 also sends a token that he has get (for example by scanning a QR code printed on the box comprising the device or received by e-mail from the MNO 21 - it can also be connecting to an Internet site indicated in an e-mail received from the MNO 21). The answer of step 54 comprises the scanned or received token, the TAC and the IMEI. It is also possible to send also from the device 23 to the SM-DP+ 22 the caracteristics of the device and those of the eUICC. The TAC identifies the type of the device 23 and is comprised in the IMEI.

At step 55, the SM-DP+ server 22 checks if the token received from the device 23 is present and not already used for another device. The SM-DP+ server 22 retrieves one preferred profile (if such a preferred profile exists, i.e. has been successfully downloaded on a device of the same type or model) or authorized profile (by default, if such a profile has not been downloaded earlier on a device), based on the token received from the device 23 (comprising the device type identifier) and books this profile.

If no preferred profile type is present for this device type (based on the device type identifier), the SM-DP+ server 22 takes one profile from Authorized profile type. The Authorized profile type is the default profile. It means that a profile of this type will be downloaded at the first receipt of a request of a device. If this profile does not suit for the device (Install Error like it will be described afterwards), the Authorized profile type will be classified by the SM-DP+ 22 in the Forbidden profiles for this device type/model. On the contrary, if this profile suits for the device (Install Success like it will be described afterwards), the authorized profile type will be classified by the SM-DP+ 22 in the Preferred profiles for this device type/model.

At step 56, the device/LPA 23 continues "download" actions with ES9+

### (GetBound ProfilePackage).

After step 56, on receipt of HandleNotification, the SM-DP+ server 22 server performs:
If the download is successfull, the device/LPA 23 sends a notification of installation success at step 57a to the SM-DP+ 22 and the SM-DP+ 22 sends at step 58 this notification to the MNO server 21. The profile type is now a preferred profile type for this device type (if not already decided before). The MNO can then activate this profile (subscription) in its backend. The MNO will from this moment on (if the device type is known from the MNO 21 before ordering the download of a profile) generate Tokens (at step 53) for this type of devices corresponding to Preferred profile types.
- If the download has failed, the device/LPA 23 sends a notification of installation failure at step 57b to the SM-DP+ 22. The SMDP+ 22, at step 57c then analyzes what error has occurred and updates the Forbidden profile. The SM-DP+ 22 will never propose again this profile to this kind of device (based on the type/model). The type of this profile is now Forbidden for this device type.

At step 59, the device/LPA 23 retries a download (like for step 56) of another Authorized profile type and if the download is successful, the SM-DP+ 22 is informed of this success (step 60). For this retry, the SMDP+ server 22 takes the next preferred profile (or authorized profile if no preferred profile is available). The MNO server 21 is informed of this installation success at step 61. The MNO can then activate this profile (subscription) in its backend.

With this solution, there is only one error per attempt: The first for an authorized profile type with a bad configuration (Install Error). Once the SM-DP+ 22 has updated the profile type, all other subsequent downloads will be successful.

The invention also concerns a SM-DP+ 22 comprising means for selecting a profile for a secure element cooperating with a device 23, the SM-DP+ 22 storing profiles classified in three categories:
- Preferred profile type, a profile type that has been successfully downloaded in a previous secure element;
- Authorized profile type, a profile type that is authorized to be downloaded to the secure element by the MNO providing the profile type to the SM-DP+ 22;
- Forbidden profile type, a profile type that has been downloaded on a previous device with failure,
   the SM-DP+ 22 also comprising means for selecting, based on a device type identifier received from the device 23, a Preferred profile type or an Authorized profile type and downloading from the SM-DP+ 22 to the device 23 a profile selected in the Preferred profile type or Authorized profile type in function of the device type identifier.
The invention is applicable to Consumer products and M2M business.

## Claims

1. A method for downloading a profile from a SM-DP+ (22) to a secure element cooperating with a device (23), said SM-DP+ (22) storing profiles classified in three categories:
- Preferred profile type, a profile type that has been successfully downloaded in a previous secure element;
- Authorized profile type, a profile type that is authorized to be downloaded to said secure element by the MNO providing said profile type to said SM-DP+ (22);
- Forbidden profile type, a profile type that has been downloaded on a previous device with failure,
said method comprising:
- Retrieving by said SM-DP+ (22) a device type identifier of said device (23) and selecting in said categories a Preferred profile type or an Authorized profile type in function of said device type identifier;
- Downloading from said SM-DP+ (22) to said device (23) a profile selected in said Preferred profile type or Authorized profile type in function of said device type identifier.

2. A method according to claim 1 wherein said device type identifier is a TAC or an IMEI.

3. A method according to any of the claims 1 and 2, wherein said secure element is a Sim card, a UICC, an eUICC or an iUICC.

4. A SM-DP+ (22) comprising means for selecting a profile for a secure element cooperating with a device (23), said SM-DP+ (22) storing profiles classified in three categories:
- Preferred profile type, a profile type that has been successfully downloaded in a previous secure element;
- Authorized profile type, a profile type that is authorized to be downloaded to said secure element by the MNO providing said profile type to said SM-DP+ (22);
- Forbidden profile type, a profile type that has been downloaded on a previous device with failure,
said SM-DP+ (22) also comprising means for selecting, based on a device type identifier received from said device (23), a Preferred profile type or an Authorized profile type and downloading from said SM-DP+ (22) to said device (23) a profile selected in said Preferred profile type or Authorized profile type in function of said device type identifier.
